# DEMANDE DE BREVET EUROPEEN

(11) **EP 1 241 030 A1**
(43) Date de publication de la demande: **18.09.2002**
(21) Numéro de dépôt: 02290510.3
(22) Date de dépôt: 01.03.2002
(51) Int. Cl.: B60G 21/05, B60B 35/02, F16F 1/14

(54) **Suspension de véhicule avec une barre anti-dévers**

(30) Priorité: 12.03.2001 FR 0103283
(71) Demandeur: Auto Chassis International, 92100 Boulogne Billancourt (FR)
(72) Inventeur: Leprovost, Fabien, 78860 Saint Nom la Breteche (FR)
(74) Mandataire: Srour, Elie

(57) **Abrégé**

Une suspension de véhicule automobile comporte deux bras longitudinaux (2, 3) articulés sur la carrosserie. Les bras longitudinaux (2, 3) sont reliés par une barre anti-dévers (10, 20, 30, 40, 50) qui comporte au moins un repli (14, 26, 36, 46) pour diminuer l'inertie de flexion de la barre, tout en conservant la même inertie de torsion, et ainsi diminuer les contraintes à l'encastrement de la barre sur les bras longitudinaux.

La barre anti-dévers comporte au moins un tube (11, 21, 31, 35, 41, 45, 51, 53, 55), et le repli comporte au moins une collerette (12, 22, 32, 42) et un flanc de raccordement (13, 23, 33, 34, 43, 44) de la collerette au tube.

## Description

L'invention concerne une suspension de véhicule automobile avec une barre anti-dévers.

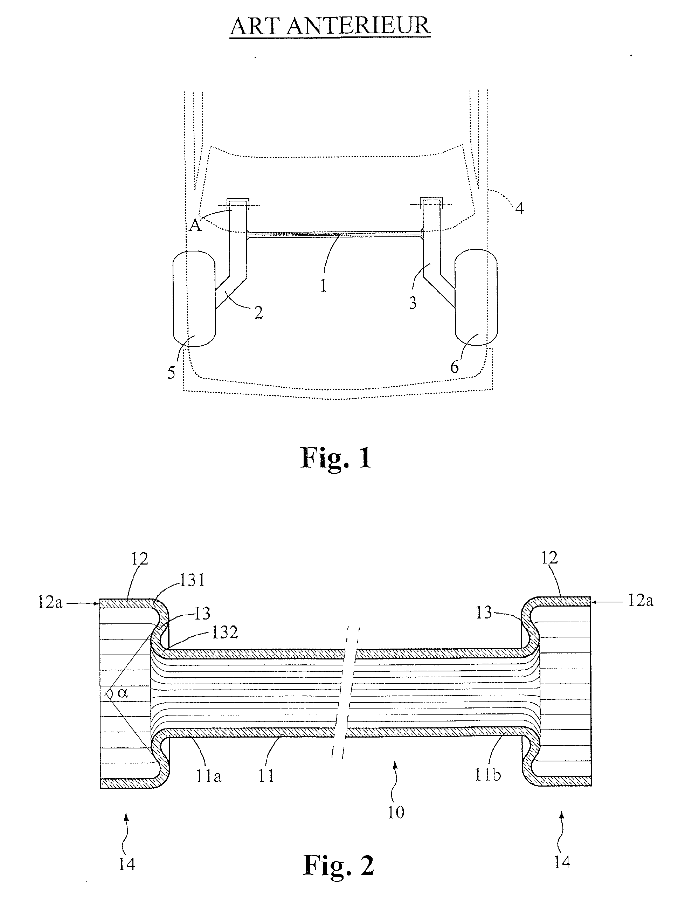

Une suspension de véhicule automobile est montrée sur la figure 1. Elle comporte deux bras longitudinaux 2, 3 articulés sur la carrosserie du véhicule 4 sensiblement autour du même axe de pivotement A transversal. De plus, une barre anti-dévers 1 élastique en torsion relie les deux bras 2, 3 parallèlement et à proximité de l'axe de pivotement A. Une roue 5, 6 est montée rotative à l'extrémité de chaque bras longitudinal 2, 3. Des moyens élastiques et amortissants, non représentés, agissent sur les bras 2, 3 pour soutenir le véhicule de manière connue en soi.

Lorsque le véhicule effectue un virage, le poids du véhicule est transféré partiellement du côté extérieur au virage. De ce fait, les bras longitudinaux tendent à pivoter de manière différentielle, ce qui donne du roulis au véhicule. La barre anti-dévers, par sa rigidité élastique en torsion, s'oppose au pivotement différentiel des deux bras longitudinaux pour limiter le roulis du véhicule.

Lorsque l'une des roues du véhicule passe dans une dépression ou sur une bosse, un premier bras longitudinal qui porte la roue pivote pour absorber cette irrégularité. Cependant, la barre anti-dévers entraîne le deuxième bras longitudinal dans le même sens de pivotement. Grâce à l'élasticité de la barre anti-dévers, le pivotement du deuxième bras longitudinal n'est pas aussi important que celui du premier. L'élasticité en torsion de la barre anti-dévers est donc un compromis entre ces deux fonctions.

Pour des contraintes d'encombrement, il n'est en général pas possible de mettre la barre anti-dévers dans l'axe de pivotement. Elle est en général fixée par soudure par ses extrémités aux bras longitudinaux par un cordon de soudure circulaire, et décalée de quelques centimètres par rapport à l'axe de pivotement. En conséquence, le pivotement différentiel des bras longitudinaux entraîne en plus de la torsion une flexion de la barre anti-dévers. Comme celle-ci est encastrée dans les bras longitudinaux, la flexion entraîne des contraintes d'encastrement importantes.

Le document DE-4110571 propose une barre anti-dévers dont les extrémités comporte une augmentation de diamètre. Ainsi, la fixation par soudure est réalisée avec un cordon de soudure de plus grand diamètre. De ce fait, les contraintes d'encastrement sont diminuées par une distance dans l'encastrement plus importante entre les points extrêmes de la soudure et par une augmentation de la section de soudure sollicitée. Cependant, l'espace disponible sur le bras longitudinal n'est pas toujours suffisant pour réaliser une soudure de plus grand diamètre. De plus il est nécessaire d'effectuer une opération de formage des extrémités de la barre.

On connaît par la demande de brevet FR 99-08579 au nom de la demanderesse une barre de torsion de conformation tubulaire et dont la section transversale a une dimension plus importante que l'autre. La section est par exemple rectangulaire, oblongue ou elliptique. Ainsi, pour une même rigidité en torsion, la rigidité en flexion selon le plus grand axe de la section est diminuée. Les contraintes de flexion sont donc limitées.

Cependant, dans ces deux cas, la réduction des contraintes de flexion n'est pas toujours suffisante.

L'invention a donc pour objectif de fournir une suspension de véhicule comportant une barre anti-dévers, dont la fixation sur les bras longitudinaux ne génère pas de contraintes à l'encastrement trop élevées.

Avec ces objectifs en vue, l'invention a pour objet une suspension de véhicule automobile comportant deux bras longitudinaux, une barre anti-dévers reliant les deux bras longitudinaux et comportant au moins un tube, caractérisée en ce que la barre anti-dévers comporte en outre au moins un repli, le repli comportant une collerette tubulaire d'un diamètre supérieur à celui du tube et au moins un flanc de raccordement de la collerette à une extrémité du tube, le flanc étant plat ou en retrait par rapport à l'extrémité du tube.

Grâce à l'invention, la barre anti-dévers a une rigidité en torsion au moins équivalente à celle du tube, et une rigidité en flexion nettement diminuée. En effet, lorsqu'un effort de flexion sollicite la collerette par rapport au tube, le flanc est sollicité localement en flexion et offre beaucoup moins de résistance que le tube dont la sollicitation locale serait de la traction ou de la compression. De plus, grâce au repli, la barre anti-dévers admet de légères déformations axiales.

Selon une caractéristique particulière, le flanc de raccordement est relié à la collerette et au tube par des congés. On constate qu'ainsi l'inertie de flexion est diminuée de manière plus importante.

De manière préférentielle, les congés ont un rayon moyen supérieur à l'épaisseur de paroi du tube.

De manière plus particulière encore, les congés ont un rayon moyen sensiblement de deux fois l'épaisseur de paroi du tube. On obtient ainsi un optimum de diminution de l'inertie de flexion.

Selon un premier mode de réalisation, la barre anti-dévers comporte un repli aux deux extrémités d'un tube, chaque repli comportant une collerette et un flanc de raccordement de la collerette au tube, les collerettes étant fixées sur les bras longitudinaux.

La barre anti-dévers est fixée par exemple en soudant la collerette sur les bras. Ainsi, grâce aux replis, la barre anti-dévers fléchit là où les contraintes de flexion seraient les plus importantes. Les replis forment ainsi une sorte d'articulation de la barre anti-dévers à ses deux extrémités. Grâce à l'invention, les contraintes de flexion sont ainsi fortement diminuées, sans que la rigidité en torsion ne soit sensiblement modifiée. Par conséquence, le contraintes dans les soudures d'encastrement des tubes latéraux sont réduites, même si la section et le diamètre des soudures ne sont pas modifiés.

Selon une caractéristique particulière, le flanc de raccordement est sensiblement conique, et est relié à la collerette et au tube par des congés.

Préférentiellement, l'angle d'ouverture du cône est compris entre 70° et 110°. On obtient ainsi un optimum de diminution de l'inertie de flexion.

Selon un deuxième mode de réalisation, la barre anti-dévers comporte un repli aux deux extrémités, chaque repli comportant une collerette et un flanc de raccordement de la collerette au tube, la section longitudinale de la paroi de l'extrémité de la barre anti-dévers formant sensiblement un C, le tube traversant les bras longitudinaux, une branche du C étant la collerette et soudée sur une paroi d'un bras longitudinal.

Ainsi, les efforts de flexion sont entièrement repris par les bras longitudinaux sans que la soudure ne soit sollicitée en flexion. La soudure ne reçoit que les efforts de torsion. Comme la soudure est réalisée sur la collerette qui a un plus grand diamètre que le tube, la section de soudure sollicitée est plus importante. Les contraintes dans la soudure sont donc moindres.

Selon un troisième mode de réalisation, la barre anti-dévers comporte deux tubes de longueur sensiblement égale et reliés par un repli, le repli comportant deux flancs, chaque flanc raccordant la collerette à l'un des tubes.

La barre anti-dévers comporte ainsi un affaiblissement en flexion vers son milieu, les extrémités de la barre étant encastrées sur les bras longitudinaux. On constate de manière surprenante que cet affaiblissement diminue les contraintes au niveau de l'encastrement, de l'ordre de 10 à 15%.

Selon une première variante du troisième mode de réalisation, les flancs de raccordement sont sensiblement plats. La technique de réalisation est ainsi relativement simple.

Selon une deuxième variante du troisième mode de réalisation, chaque flanc de raccordement comporte une première couronne sensiblement plane, un dévoiement orienté vers le tube latéral auquel la première couronne est reliée, et une deuxième couronne reliée à la collerette. Le repli ainsi réalisé est plus souple que dans la première variante.

Selon un quatrième mode de réalisation, la barre anti-dévers comporte, axialement juxtaposés, un tube central et deux tubes latéraux, deux replis comportant chacun deux flancs, chaque repli reliant l'un des tubes latéraux au tube central.

Les tubes latéraux sont encastrés sur les bras longitudinaux. Cependant, les replis autorisent un petit désalignement des axes des tubes latéraux et central lors du travail de la suspension. Ainsi, le décalage des tubes latéraux n'engendre pas de moments fléchissants importants, ce qui réduit de manière importante les contraintes de flexion au niveau de l'encastrement des tubes latéraux sur les bras longitudinaux. Ce mode de réalisation est préféré quand les contraintes d'encombrement empêche la fixation de la barre anti-dévers selon le premier mode de réalisation.

La fabrication de la barre anti-dévers peut être effectuée selon différentes méthodes. En général, l'ébauche de la barre est un tube. Les replis sont créés par des déformations locales. On utilise selon les cas la frappe à froid, la frappe à chaud ou l'hydroformage par exemple.

L'invention sera mieux comprise et d'autres particularités et avantages apparaîtront à la lecture de la description qui va suivre, la description faisant référence aux dessins annexés parmi lesquels :
- la figure 1 est une vue de dessus d'une suspension selon l'art antérieur ;
- la figure 2 est une vue en coupe d'une barre anti-dévers selon un premier mode de réalisation de l'invention ;
- la figure 3 est une vue en coupe partielle d'une barre anti-dévers et d'un bras longitudinal selon un deuxième mode de réalisation de l'invention ;
- la figure 4 est une section partielle d'une barre anti-dévers selon une première variante d'un troisième mode de réalisation de l'invention ;
- la figure 5 est une section partielle d'une barre anti-dévers selon une deuxième variante du troisième mode de réalisation de l'invention ;
- la figure 6 est une vue d'une barre anti-dévers selon un quatrième mode de réalisation de l'invention.

Une barre anti-dévers 10 conforme à l'invention est disposée sur une suspension similaire à celle de l'art antérieur montré sur la figure 1.

Selon un premier mode réalisation, montré sur la figure 2, une barre anti-dévers 10 conforme à l'invention comporte un tube central 11 et, à chaque extrémité un repli 14 comportant une collerette 12 et un flanc 13 de raccordement, le flanc 13 étant relié à la collerette 12 par un congé 131 et à l'extrémité 11a, 11b du tube central 11 par un congé 132. Le flanc a sensiblement la forme d'un tronc de cône dont l'angle d'ouverture α est sensiblement compris entre 70° et 110°. L'épaisseur du tube central, des flancs et des collerettes est sensiblement la même. La section du flanc de raccordement 12 est sensiblement en S, de telle sorte que le flanc est en retrait par rapport à l'extrémité 11a, 11b du tube.

La barre anti-dévers 10 est soudée sur les flancs des bras longitudinaux en bout, le long de la face extrême 12a des collerettes 12.

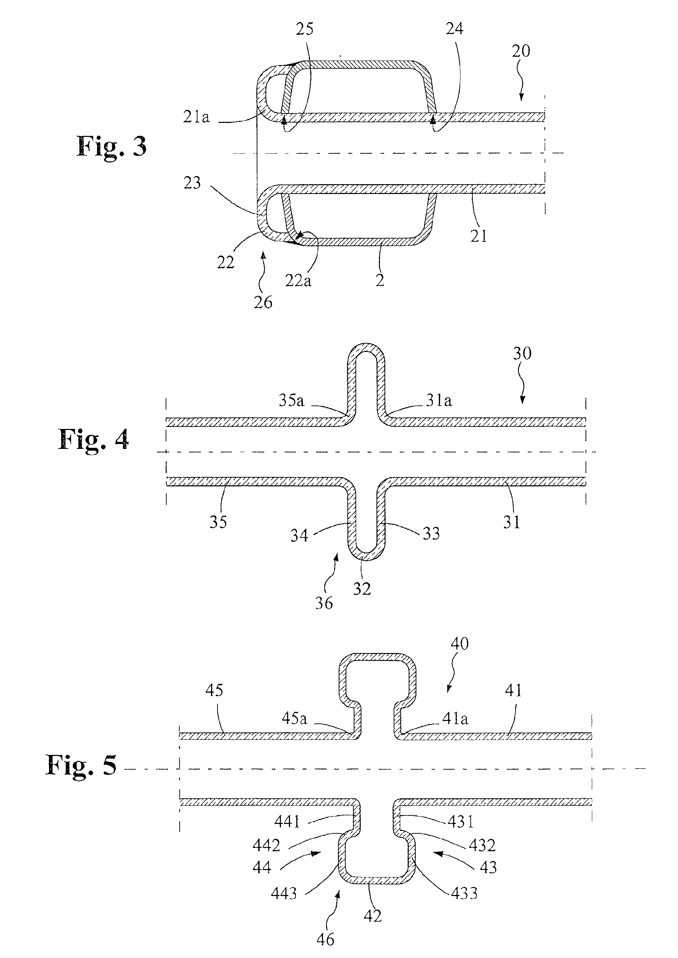

Dans un deuxième mode de réalisation, montré sur la figure 3, la barre anti-dévers 20 comporte un tube central 21 et, à chaque extrémité 21a, un repli 26 comportant une collerette 22 et un flanc 23 de raccordement, le flanc 23 reliant la collerette 22 à l'extrémité 21a du tube central. Le flanc est sensiblement plat et la collerette 22 est située au dessus du tube 21, le repli 26 ayant sensiblement une forme en C. L'épaisseur du tube central, des flancs et des collerettes est sensiblement la même. Le tube central 21 traverse le bras longitudinal 2, 3 par des trous 24, 25 dans les parois des bras. La collerette est soudée sur la paroi du bras longitudinal 2, 3.

Selon un troisième mode de réalisation, dont deux variantes sont montrées sur les figures 4 et 5, la barre anti-dévers 30, 40 comporte deux tubes latéraux 31, 35, 41, 45 reliés par un repli central 36, 46. Les deux tubes 31, 35, 41, 45 sont de longueurs sensiblement égales, et ont une extrémité soudée sur un des bras longitudinaux.

Dans la première variante, le repli 36 comporte une collerette 32 et deux flancs de raccordement 33, 34, le premier flanc 33 reliant la collerette 32 à une extrémité 31a du premier tube latéral 31, le deuxième flanc 34 reliant la collerette 32 à une extrémité 35a du deuxième tube latéral 35. Les flancs de raccordement 33, 34 sont sensiblement plats.

Dans une deuxième variante, montrée sur la figure 5, le repli 46 comporte une collerette 42 et deux flancs de raccordement 43, 44, le premier flanc 43 reliant la collerette 42 à une extrémité 41a d'un premier tube latéral 41, le deuxième flanc 44 reliant la collerette 42 à une extrémité 45a d'un deuxième tube latéral 45. Chaque flanc 43, 44 comporte une première couronne 431, 441 sensiblement plane, un dévoiement 432, 442 orienté vers le tube latéral 41, 45 auquel la première couronne 431, 441 est reliée, et une deuxième couronne 433, 443. Grâce aux dévoiements 432, 442, la collerette 42 est plus large que dans la première variante. Le repli a une forme générale en oméga.

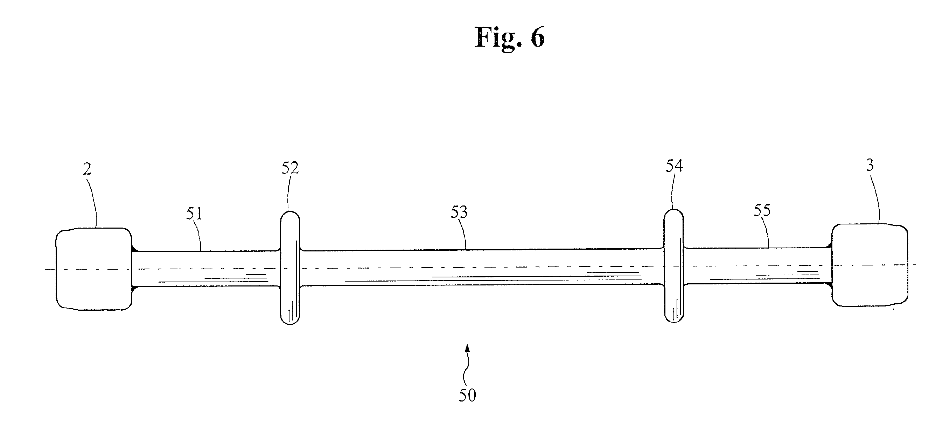

Dans un quatrième mode de réalisation, montré sur la figure 6, la barre anti-dévers 50 comporte un premier tube latéral 51, un premier repli 52, un tube central 53, un deuxième repli 54 et un deuxième tube latéral 55. Le premier tube latéral 51 est soudé sur le bras longitudinal 2, tandis que le deuxième tube latéral 55 est soudé sur le bras longitudinal 3. Le premier repli 52 relie le premier tube latéral 51 au tube central 53, tandis que le deuxième repli 54 relie le deuxième tube latéral 55 au tube central 53. La forme des replis 52, 54 est par exemple celle des replis 36, 46 des variantes du troisième mode de réalisation et montrés sur les figures 4 et 5.

## Revendications

1. Suspension de véhicule automobile comportant deux bras longitudinaux (2, 3), une barre anti-dévers (10, 20, 30, 40, 50) reliant les deux bras longitudinaux (2, 3) et comportant au moins un tube (11, 21, 31, 35, 41, 45, 51, 53, 55), **caractérisée en ce que** la barre anti-dévers (10, 20, 30, 40, 50) comporte en outre au moins un repli (14, 26, 36, 46, 52, 54), le repli comportant une collerette (12, 22, 32, 42) tubulaire d'un diamètre supérieur à celui du tube et au moins un flanc de raccordement (13, 23, 33, 34, 43, 44) de la collerette à une extrémité (11a, 11b, 21a, 31a, 35a, 41a, 45a) du tube, le flanc étant plat ou en retrait par rapport à l'extrémité du tube (11a, 11b, 21a, 31a, 35a, 41a, 45a).

2. Suspension selon la revendication 1, **caractérisée en ce que** le flanc de raccordement (13, 23, 33, 34, 43, 44) est relié à la collerette (12, 22, 32, 42) et au tube (11, 21, 31, 35, 41, 45, 51, 53, 55) par des congés (131, 132).

3. Suspension selon la revendication 2, **caractérisée en ce que** les congés (131, 132) ont un rayon moyen supérieur à l'épaisseur de paroi du tube.

4. Suspension selon la revendication 3, **caractérisée en ce que** les congés (131, 132) ont un rayon moyen sensiblement de deux fois l'épaisseur de paroi du tube.

5. Suspension selon la revendication 1, **caractérisée en ce que** la barre anti-dévers (10) comporte un repli (14) aux deux extrémités d'un tube (11), chaque repli (14) comportant une collerette (12) et un flanc (13) de raccordement de la collerette (12) au tube (11), les collerettes (12) étant fixées sur les bras longitudinaux (2, 3).

6. Suspension selon la revendication 5, **caractérisée en ce que** le flanc de raccordement (13) est sensiblement conique, et est relié à la collerette (12) et au tube (11) par des congés (131, 132).

7. Suspension selon la revendication 6, **caractérisée en ce que** l'angle d'ouverture (α) du cône du flanc est compris entre 70° et 110°.

8. Suspension selon la revendication 1, **caractérisée en ce que** la barre anti-dévers (20) comporte un repli (26) aux deux extrémités, chaque repli comportant une collerette (22) et un flanc (23) de raccordement de la collerette au tube (21), la section longitudinale de la paroi de l'extrémité de la barre anti-dévers formant sensiblement un C, le tube traversant les bras longitudinaux (2, 3), une branche du C étant la collerette (22) et soudée sur une paroi d'un bras longitudinal (2, 3).

9. Suspension selon la revendication 1, **caractérisée en ce que** la barre anti-dévers (30, 40) comporte deux tubes de longueur (31, 35 ; 41, 45) sensiblement égale et reliés par un repli (36, 46), le repli comportant deux flancs (33, 34 ; 43, 44), chaque flanc raccordant la collerette (32, 42) à l'un des tubes (31, 35 ; 41, 45).

10. Suspension selon la revendication 1, **caractérisée en ce que** la barre anti-dévers (50) comporte un tube central (53) et deux tubes latéraux (51, 55), deux replis (52, 54) comportant chacun deux flancs, chaque repli reliant l'un des tubes latéraux (51, 55) au tube central (53).

11. Suspension selon la revendication 9 ou 10, **caractérisée en ce que** les flancs de raccordement (33, 34) sont sensiblement plats.

12. Suspension selon la revendication 9 ou 10, **caractérisée en ce que** chaque flanc (43, 44) de raccordement comporte une première couronne (431, 441) sensiblement plane, un dévoiement (432, 442) orienté vers le tube (41, 45) auquel la première couronne (431, 441) est reliée, et une deuxième couronne (433, 443) reliée à la collerette (42).
